# EUROPEAN PATENT APPLICATION

(11) **EP 4 389 814 A1**
(43) Date of publication of application: **26.06.2024**
(21) Application number: 23213964.2
(22) Date of filing: 04.12.2023
(51) Int. Cl.: C08L 7/00, C08K 3/36, C08K 3/04, C08L 9/00

(54) **RUBBER COMPOSITION FOR TIRE TREAD AND PNEUMATIC TIRE USING THE SAME**

(30) Priority: 21.12.2022 JP 2022204658
(71) Applicant: Toyo Tire Corporation, Itami-shi, Hyogo 664-0847 (JP)
(72) Inventor: ICHINOSE, Gouya, Itami-shi, Hyogo, 664-0847 (JP); MINOUCHI, Norio, Itami-shi, Hyogo, 664-0847 (JP)
(74) Representative: Wallinger Ricker Schlotter Tostmann

(57) **Abstract**

A rubber composition for a tire tread, containing: 100 parts by mass of diene rubber containing 50% by mass or more of natural rubber and/or isoprene rubber; 14 to 30 parts by mass of carbon black having a nitrogen adsorption specific surface area of 80 to 150 m²/g; and 30 to 80 parts by mass of silica having a nitrogen adsorption specific surface area of 120 to 250 m²/g, in which a content rate between the silica and the carbon black (silica/carbon black) by mass rate is more than 1.

## Description

### BACKGROUND OF THE INVENTION

### 1. Field of the Invention

The present invention relates to a rubber composition for a tire tread and a pneumatic tire using the same.

### 2. Description of Related Art

As heavy-load tires used for trucks, buses, etc., long-life tires excellent in abrasion resistance are required. In recent years, the demand for low rolling resistance has also been increasing for a reduction of environmental load and an improvement in fuel economy.

As measures for improving abrasion resistance, methods such as blending a large amount of carbon black, using carbon black having a small particle size, and using carbon black having a large structure are employed. However, with these measures, low rolling resistance may be deteriorated. On the other hand, as measures for improving low rolling resistance, methods such as blending a small amount of silica are employed. However, with these measures, abrasion resistance may be deteriorated. Thus, abrasion resistance and low rolling resistance are in the antinomic relationship.

### SUMMARY OF THE INVENTION

In view of the above points, an object of the invention is to provide a rubber composition for a tire tread and a pneumatic tire using the same, with which excellent low rolling resistance and abrasion resistance can be obtained.

JP2020-125423A describes a rubber composition, for tire, having significantly improved combined performance of low fuel consumption performance and chip-cut resistance. However, no Examples in which a content rate between silica and carbon black (silica/carbon black) falls within the range of the invention are described.

JP2019-056068A describes a rubber composition for a heavy-load tire by which abrasion resistance and low rolling resistance are enhanced to or beyond conventional levels. However, no Examples in which a content of carbon black falls within the range of the invention are described.

WO2014/157722A1 describes a rubber composition for a heavy-load pneumatic tire by which low rolling resistance, abrasion resistance, and uneven abrasion resistance are enhanced to or beyond conventional levels. However, no Examples in which contents of carbon black and silica, and a content rate between silica and carbon black fall within the ranges of the invention are described.

The invention includes the following embodiments.
[1] A rubber composition for a tire tread, containing: 100 parts by mass of diene rubber containing 50% by mass or more of natural rubber and/or isoprene rubber; 14 to 30 parts by mass of carbon black having a nitrogen adsorption specific surface area of 80 to 150 m²/g; and 30 to 80 parts by mass of silica having a nitrogen adsorption specific surface area of 120 to 250 m²/g, in which a content rate between the silica and the carbon black (silica/carbon black) by mass rate is more than 1.
[2] The rubber composition for a tire tread according to [1], for a heavy-load tire.
[3] The rubber composition for a tire tread according to [1] or [2], containing a silane coupling agent having a sulfide bond, by a ratio of 6 to 15% by mass relative to the content of the silica.
[4] The rubber composition for a tire tread according to any one of [1] to [3], in which the content rate between the silica and the carbon black (silica/carbon black) by mass rate is 1.2 to 5.0.
[5] A pneumatic tire formed by using the rubber composition according to any one of [1] to [4] for a tread.

According to the rubber composition for a tire tread of the invention, a pneumatic tire having excellent low rolling resistance and abrasion resistance can be obtained.

### DESCRIPTION OF EMBODIMENTS

Matters related to the implementation of the invention are described in detail below.

The rubber composition for a tire tread according to the present embodiment contains: 100 parts by mass of diene rubber containing 50% by mass or more of natural rubber and/or isoprene rubber; 14 to 30 parts by mass of carbon black having a nitrogen adsorption specific surface area of 80 to 150 m²/g; and 30 to 80 parts by mass of silica having a nitrogen adsorption specific surface area of 120 to 250 m²/g, in which a content rate between the silica and the carbon black (silica/carbon black) by mass rate is more than 1.

The diene rubber may be constituted by natural rubber and/or isoprene rubber only, and may be further blended with other rubber components such as, for example, butadiene rubber (BR), styrene-butadiene rubber (SBR), nitrile rubber (NBR) chloroprene rubber (CR) butyl rubber (IIR), styrene-isoprene copolymer rubber, butadiene-isoprene copolymer rubber, and styrene-isoprene-butadiene copolymer rubber, to the extent that the original effect is not compromised. The diene rubber preferably contains 60% by mass or more and more preferably contains 70% by mass or more of natural rubber and/or isoprene rubber. In one embodiment, 100 parts by mass of the diene rubber may contain: 50 to 100 parts by mass of natural rubber and/or isoprene rubber and 0 to 50 parts by mass of butadiene rubber; more preferably 60 to 100 parts by mass of natural rubber and/or isoprene rubber and 0 to 40 parts by mass of butadiene rubber; and more preferably 70 to 100 parts by mass of natural rubber and/or isoprene rubber and 0 to 30 parts by mass of butadiene rubber. In another embodiment, 100 parts by mass of the diene rubber may contain 60 to 80 parts by mass of natural rubber and/or isoprene rubber and 20 to 40 parts by mass of butadiene rubber.

The rubber composition according to the embodiment contains silica and carbon black as reinforcing fillers. The silica is not particularly limited and, for example, a wet silica such as a wet-precipitation silica or a wet-gel silica may be used.

The content of the silica per 100 parts by mass of the diene rubber is 30 to 80 parts by mass, preferably 30 to 75 parts by mass, and more preferably 30 to 60 parts by mass. When the content of the silica falls within the above ranges, excellent low rolling resistance and abrasion resistance are easy to be obtained.

The nitrogen adsorption specific surface area of the silica is 120 to 250 m²/g, preferably 160 to 250 m²/g, and more preferably 160 to 210 m²/g. The nitrogen adsorption specific surface area of the silica is a BET specific surface area measured in conformance with the BET method described in JIS K6430.

The carbon black is not particularly limited and various known varieties can be used. The content of the carbon black per 100 parts by mass of the diene rubber is 14 to 30 parts by mass and preferably 14 to 25 parts by mass. When the content of the carbon black falls within the above ranges, excellent low rolling resistance and abrasion resistance are easy to be obtained.

The nitrogen adsorption specific surface area of the carbon black is 80 to 150 m²/g, preferably 100 to 150 m²/g, and more preferably 120 to 150 m²/g. The nitrogen adsorption specific surface area of the carbon black is measured in conformance with JIS K6217-2.

Total content of the silica and the carbon black per 100 parts by mass of the diene rubber is preferably 40 to 120 parts by mass, more preferably 50 to 100 parts by mass, and further preferably 50 to 90 parts by mass.

The content rate between the silica and the carbon black, namely a rate of the content of the silica relative to the content of the carbon black (silica/carbon black) by mass rate is more than 1, preferably 1.2 to 5.0, and more preferably 3.0 to 5.0.

The rubber composition according to the embodiment preferably contains a silane coupling agent. Examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, "NXT" (3-octanoylthio-1-propyltriethoxysilane) manufactured by Momentive, "NXT Z45" manufactured by Momentive, and "VP Si363" (formula: HS-(CH₂)₃-Si(OC₂H₅)ₘ(O(C₂H₄O)ₖ-C₁₃H₂₇)ₙ, in which m = 1 in average, n = 2 in average, and k = 5 in average) manufactured by Evonik Degussa; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents can be used alone, or two or more of these can be used in combination.

In one embodiment, the silane coupling agent is preferably a silane coupling agent having a sulfide bond, namely a sulfide silane coupling agent. In one embodiment, the silane coupling agent is preferably a mercapto silane coupling agent from viewpoints of processability, and low rolling resistance or abrasion resistance. Among mercapto silane coupling agents, silane coupling agents having a thioester bond (-S-CO-) with a mercapto group (-SH) blocked and having no mercapto group, for example 3-octanoylthio-1-propyltriethoxysilane, are preferred since they are superior in low rolling resistance to sulfide silane coupling agents. Among mercapto silane coupling agents, silane coupling agents having a thioester bond and a mercapto group are preferred since they are superior in abrasion resistance to sulfide silane coupling agents. Examples of the silane coupling agent having a thioester bond and a mercapto group include a silane coupling agent including a first bonding unit having an alkanoyl thioalkyl group bonded to a silicon atom and a second bonding unit having a mercaptoalkyl group bonded to a silicon atom. Specific examples thereof include a silane coupling agent that is a copolymer including a first bonding unit represented by -[O-Si(OR¹)(C₃H₆SCOC₇H₁₅)-OR²]ₓ- and a second bonding unit represented by -[O-Si(OR¹)(C₃H₆SH)-OR²]_{y}-, including the second bonding unit by a ratio of 1 to 70% by mol relative to the total amount of the first bonding unit and the second bonding unit, for example, "NXT Z45" (first bonding unit: 55% by mol, second bonding unit: 45% by mol) manufactured by Momentive. Here, R¹ represents a hydrogen, a halogen, an alkyl group having 1 to 30 carbon atoms, an alkenyl group having 2 to 30 carbon atoms, an alkynyl group having 2 to 30 carbon atoms, or a group obtained by substituting a terminal hydrogen of the above-described alkyl group or alkenyl group with a hydroxy group or a carboxy group. R² represents an alkylene group having 1 to 30 carbon atoms, an alkenylene group having 2 to 30 carbon atoms, or an alkynylene group having 2 to 30 carbon atoms. R¹ and R² may form a ring structure together. Each of x and y individually represents an integer of 1 or more.

When the silane coupling agent is contained, the content thereof relative to the content of the silica is preferably 6 to 15% by mass and more preferably 7 to 13% by mass.

In the rubber composition according to the embodiment, various additives generally used in rubber compositions, such as zinc oxide, stearic acid, an antioxidant, wax, oil, a vulcanizing agent, and a vulcanization accelerator, may be blended in addition to the above-described components.

As the vulcanizing agent, sulfur is preferably used. The content of the sulfur is not particularly limited, and is, per 100 parts by mass of the diene rubber, preferably 0.1 to 10 parts by mass and more preferably 0.5 to 5 parts by mass. Examples of the vulcanization accelerator include sulfenamide vulcanization accelerators, thiuram vulcanization accelerators, thiazole vulcanization accelerators, and guanidine vulcanization accelerators. These can be used alone, or two or more of these can be used in combination. The content of the vulcanization accelerator is not particularly limited, and is, per 100 parts by mass of the diene rubber, preferably 0.1 to 7 parts by mass and more preferably 0.5 to 5 parts by mass.

The rubber composition according to the embodiment can be prepared by kneading in accordance with a usual method using a mixer normally used, such as a Banbury mixer, a kneader, or a roll. Specifically, for example, in the first mixing stage, additives other than the vulcanizing agent and the vulcanization accelerator are added to the diene rubber, followed by mixing, and then in the last mixing stage, the vulcanizing agent and the vulcanization accelerator are added to the mixture obtained, followed by mixing, to prepare the rubber composition.

The rubber composition obtained as the above can be applied to tread of pneumatic tires for various purpose and having various sizes, such as a tire for passenger cars, and a large tire of trucks and buses, and is preferably applied to heavy-load tires. The heavy-load tire is a tire excellent in durability and examples thereof include a tire for a light truck having an indication of "LIGHT TRUCK" or "LT" on the sidewall, a tire for a truck/bus having an indication of "HIGHWAY TREAD-J" or "HW-J", or "EXTRA HEAVY TREAD" or "EHT" on the sidewall, and a tire used for industrial vehicles such as heavy machinery.

In accordance with a usual method, the rubber composition is, for example, formed into a predetermined shape by extruding and molding, and combined with other components to prepare a green tire, and the green tire is vulcanized and molded at for example 140 to 180°C to produce a pneumatic tire.

### EXAMPLES

Examples of the invention are described below, but the invention is not limited to these Examples.

Using a lab mixer and in accordance with the formulation (parts by mass) shown in Tables 1 to 3 below, in the first mixing stage, blending agents other than sulfur and vulcanization accelerator were added to diene rubber, followed by kneading (temperature at discharge was 160°C). Then in the last mixing stage, sulfur and vulcanization accelerator were added to the kneaded matter obtained, followed by kneading (temperature at discharge was 90°C), to prepare the rubber composition. Details of the components in Tables 1 to 3 are as follows. In Examples 1 to 7 and Comparative Examples 2 to 7, blending amounts or the like of silane coupling agent, sulfur, and vulcanization accelerator are adjusted so that modulus values become the same level as that of Comparative Example 1. In Examples 8 to 24 and Comparative Examples 9 to 12, blending amounts or the like of silane coupling agent, sulfur, and vulcanization accelerator are adjusted so that modulus values become the same level as that of Comparative Example 8.
·Natural rubber: RSS#3
·Butadiene rubber: "BR150L" manufactured by Ube Corporation.
·Isoprene rubber: "IR2200" manufactured by ENEOS Materials Corporation
·Styrene-butadiene rubber: "SBR1502" manufactured by ENEOS Materials Corporation
·Carbon black 1: "Seast 3" manufactured by Tokai Carbon Co., Ltd.; nitrogen adsorption specific surface area = 74 m²/g
·Carbon black 2: "Seast KH" manufactured by Tokai Carbon Co., Ltd.; nitrogen adsorption specific surface area = 93 m²/g
·Carbon black 3: "Seast 6" manufactured by Tokai Carbon Co., Ltd.; nitrogen adsorption specific surface area = 119 m²/g
·Carbon black 4: "Seast 9" manufactured by Tokai Carbon Co., Ltd.; nitrogen adsorption specific surface area = 142 m²/g
·Silica 1: "1115MP" manufactured by Solvay; nitrogen adsorption specific surface area = 115 m²/g
·Silica 2: "Ultrasil VN2" manufactured by Evonik; nitrogen adsorption specific surface area = 125 m²/g
·Silica 3: "Ultrasil VN3" manufactured by Evonik; nitrogen adsorption specific surface area = 180 m²/g
·Silica 4: "9100 GR" manufactured by Evonik; nitrogen adsorption specific surface area = 230 m²/g
·Silane coupling agent 1: sulfide type; "Si69" manufactured by Evonik
·Silane coupling agent 2: mercapto type; "NXT" manufactured by Momentive
·Silane coupling agent 3: mercapto type; "NXT Z45" manufactured by Momentive
·Zinc oxide: "Zinc oxide #2" manufactured by Mitsui Mining & Smelting Co., Ltd.
·Stearic acid: "Bead Stearic Acid" manufactured by NOF Corporation
·Wax: "OZOACE0355" manufactured by Nippon Seiro Co., Ltd.
·Processing aid: "Aktiplast PP" manufactured by Lanxess
·Antioxidant: "Nocrac 6C" manufactured by Ouchi Shinko Chemical Industrial Co., Ltd.
·Vulcanization accelerator 1: "Nocceler D" manufactured by Ouchi Shinko Chemical Industrial Co., Ltd.
·Vulcanization accelerator 2: "Nocceler NS" manufactured by Ouchi Shinko Chemical Industrial Co., Ltd.
·Sulfur: "Powdery sulfur" manufactured by Tsurumi Chemical Industry Co., Ltd.

Each of the rubber compositions obtained was vulcanized at 150°C for 30 minutes to prepare a sample having a predetermined shape. The sample was subjected to evaluations of low rolling resistance and abrasion resistance, and a measurement of modulus (M300). Measurement methods are as below.
·Low rolling resistance: A loss coefficient tan δ was measured under conditions of a frequency of 10 Hz, a static strain of 10%, a dynamic strain of 1%, and a temperature of 60°C, using a viscoelasticity tester manufactured by UBM. The inverse number of the loss coefficient tan δ was indicated as an index with the value in Comparative Example 1 being regarded as 100 in Table 1, and with the value in Comparative Example 8 being regarded as 100 in Tables 2 and 3. A larger index indicates that tan δ is smaller and low rolling resistance (that is, low fuel consumption) is more excellent.
·Abrasion resistance: In conformance with JIS K6264, abrasion loss was measured under conditions of an applied load of 40 N, a slip ratio of 30%, and a fallen sand amount of 20 g, using a Lambourn abrasion tester manufactured by Iwamoto Seisakusho Co. The inverse number of the abrasion loss was indicated as an index with the value in Comparative Example 1 being regarded as 100 in Table 1, and with the value in Comparative Example 8 being regarded as 100 in Tables 2 and 3. A larger index indicates that abrasion resistance is more excellent.
·Modulus (M300): In conformance with JIS K6251, modulus (M300 (MPa)) at 300% elongation when a tensile test using a dumbbell-shaped No. 3 type test piece was performed was measured. The modulus was indicated as an index with the value in Comparative Example 1 being regarded as 100 in Table 1, and with the value in Comparative Example 8 being regarded as 100 in Tables 2 and 3.

**Table 1**

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Natural rubber | 100 | 100 | 100 | 100 | 100 | 100 | 100 |
| Carbon black 1 | - | - | - | - | 25 | - | - |
| Carbon black 4 | 50 | 45 | 33 | 2 | - | 25 | 8 |
| Silica 1 | - | - | - | - | - | 40 | - |
| Silica 3 | - | 10 | 30 | 70 | 40 | | 40 |
| Silica 4 | - | - | - | - | - | - | - |
| Silane coupling agent 1 | - | 1 | 1.8 | 7 | 3.2 | 2.4 | 4 |
| Zinc oxide | 3 | 3 | 3 | 3 | 3 | 3 | 3 |
| Stearic acid | 3 | 3 | 3 | 3 | 3 | 3 | 3 |
| Wax | 1 | 1 | 1 | 1 | 1 | 1 | 1 |
| Processing aid | - | - | | - | 1 | 1 | 1 |
| Antioxidant | 2 | 2 | 2 | 2 | 2 | 2 | 2 |
| Vulcanization accelerator 1 | - | 0.5 | 0.5 | 1 | 0.5 | 0.5 | 0.5 |
| Vulcanization accelerator 2 | 1 | 1 | 1 | 1 | 1 | 1 | 1.7 |
| Sulfur | 1.5 | 1.5 | 1.5 | 1.5 | 1.5 | 1.5 | 2.3 |
| Silica/carbon black | - | 0.22 | 0.91 | 35.00 | 1.60 | 1.60 | 5.00 |
| Amount of silane coupling agent relative to silica content (% by mass) | 0% | 10% | 6% | 10% | 8% | 6% | 10% |
| Modulus (M300) | 100 | 103 | 101 | 100 | 90 | 92 | 100 |
| Low rolling resistance | 100 | 111 | 116 | 130 | 125 | 118 | 135 |
| Abrasion resistance | 100 | 92 | 97 | 85 | 98 | 99 | 80 |

| | Ex. 1 | Ex. 2 | Ex. 3 | Ex. 4 | Ex. 5 | Ex. 6 | Ex. 7 |
|---|---|---|---|---|---|---|---|
| Natural rubber | 100 | 100 | 100 | 100 | 100 | 100 | 100 |
| Carbon black 1 | - | | - | - | | | - |
| Carbon black 4 | 25 | 25 | 25 | 15 | 15 | 25 | 25 |
| Silica 1 | | - | | - | - | - | - |
| Silica 3 | 40 | 45 | 55 | 50 | 60 | - | - |
| Silica 4 | - | - | - | - | - | 30 | 40 |
| Silane coupling agent 1 | 5.2 | 4.5 | 4.4 | 6.5 | 6 | 3.9 | 4 |
| Zinc oxide | 3 | 3 | 3 | 3 | 3 | 3 | 3 |
| Stearic acid | 3 | 3 | 3 | 3 | 3 | 3 | 3 |
| Wax | 1 | 1 | 1 | 1 | 1 | 1 | 1 |
| Processing aid | 1 | 1 | 1 | 1 | 1 | 1 | 1 |
| Antioxidant | 2 | 2 | 2 | 2 | 2 | 2 | 2 |
| Vulcanization accelerator 1 | 0.5 | 0.5 | 0.5 | 0.75 | 0.75 | 0.75 | 0.75 |
| Vulcanization accelerator 2 | 1 | 1 | 1 | 1 | 1 | 1 | 1 |
| Sulfur | 1.5 | 1.5 | 1.5 | 1.5 | 1.5 | 1.5 | 1.5 |
| Silica/carbon black | 1.60 | 1.80 | 2.20 | 3.33 | 4.00 | 1.20 | 1.60 |
| Amount of silane coupling agent relative to silica content (% by mass) | 13% | 10% | 8% | 13% | 10% | 13% | 10% |
| Modulus (M300) | 100 | 100 | 102 | 105 | 106 | 98 | 95 |
| Low rolling resistance | 121 | 116 | 101 | 124 | 113 | 117 | 105 |
| Abrasion resistance | 110 | 115 | 124 | 120 | 130 | 118 | 122 |

**Table 2**

| | Comp. Ex. 8 | Comp. Ex. 9 | Comp. Ex. 10 | Comp. Ex. 11 | Comp. Ex. 12 | |
|---|---|---|---|---|---|---|
| Natural rubber | 70 | 70 | 40 | 50 | 70 | |
| Butadiene rubber | 30 | 30 | 60 | 30 | 30 | |
| Isoprene rubber | - | - | - | - | - | |
| Styrene-butadiene rubber | - | - | - | 20 | - | |
| Carbon black 2 | - | - | - | - | - | |
| Carbon black 3 | - | - | - | - | - | |
| Carbon black 4 | 50 | 35 | 15 | 35 | 7 | |
| Silica 2 | - | - | - | - | - | |
| Silica 3 | - | 30 | 60 | 30 | 50 | |
| Silica 4 | - | - | - | - | - | |
| Silane coupling agent 1 | - | 1.8 | 6 | 2.4 | 5 | |
| Silane coupling agent 2 | - | - | - | - | - | |
| Silane coupling agent 3 | - | - | - | - | - | |
| Zinc oxide | 3 | 3 | 3 | 3 | 3 | |
| Stearic acid | 3 | 3 | 3 | 3 | 3 | |
| Wax | 1 | 1 | 1 | 1 | 1 | |
| Processing aid | 1 | 1 | 1 | 1 | 1 | |
| Antioxidant | 2 | 2 | 2 | 2 | 2 | |
| Vulcanization accelerator 1 | - | 0.5 | 0.75 | 0.5 | 0.75 | |
| Vulcanization accelerator 2 | 1 | 1 | 1 | 1 | 1.5 | |
| Sulfur | 1.5 | 1.5 | 1.5 | 1.5 | 1.5 | |
| Silica/carbon black | - | 0.86 | 4.00 | 0.86 | 7.14 | |
| Amount of silane coupling agent relative to silica content (% by mass) | 0% | 6% | 10% | 8% | 10% | |
| Modulus (M300) | 100 | 100 | 89 | 95 | 100 | |
| Low rolling resistance | 100 | 107 | 95 | 98 | 140 | |
| Abrasion resistance | 100 | 94 | 121 | 90 | 83 | |

| | Ex. 8 | Ex. 9 | Ex. 10 | Ex. 11 | Ex. 12 | Ex. 13 |
|---|---|---|---|---|---|---|
| Natural rubber | 70 | 70 | 70 | 70 | 70 | 70 |
| Butadiene rubber | 30 | 30 | 30 | 30 | 30 | 30 |
| Isoprene rubber | - | - | - | - | - | - |
| Styrene-butadiene rubber | - | - | - | - | - | - |
| Carbon black 2 | - | - | - | - | - | - |
| Carbon black 3 | - | - | - | - | - | - |
| Carbon black 4 | 15 | 25 | 25 | 15 | 15 | 15 |
| Silica 2 | 75 | - | - | - | - | - |
| Silica 3 | - | 45 | 55 | 50 | 60 | 60 |
| Silica 4 | - | - | - | - | - | - |
| Silane coupling agent 1 | 4.5 | 4.5 | 4.4 | 6 | 6 | - |
| Silane coupling agent 2 | - | - | - | - | - | 7.2 |
| Silane coupling agent 3 | - | - | - | - | - | - |
| Zinc oxide | 3 | 3 | 3 | 3 | 3 | 3 |
| Stearic acid | 3 | 3 | 3 | 3 | 3 | 3 |
| Wax | 1 | 1 | 1 | 1 | 1 | 1 |
| Processing aid | 1 | 1 | 1 | 1 | 1 | 1 |
| Antioxidant | 2 | 2 | 2 | 2 | 2 | 2 |
| Vulcanization accelerator 1 | 0.5 | 0.5 | 0.75 | 0.75 | 0.75 | 0.75 |
| Vulcanization accelerator 2 | 1 | 1 | 1 | 1 | 1 | 1 |
| Sulfur | 1.5 | 1.5 | 1.5 | 1.5 | 1.5 | 1.5 |
| Silica/carbon black | 5.00 | 1.80 | 2.20 | 3.33 | 4.00 | 400 |
| Amount of silane coupling agent relative to silica content (% by mass) | 6% | 10% | 8% | 12% | 10% | 12% |
| Modulus (M300) | 99 | 102 | 102 | 105 | 107 | 103 |
| Low rolling resistance | 119 | 118 | 102 | 130 | 117 | 124 |
| Abrasion resistance | 123 | 118 | 127 | 125 | 135 | 135 |

**Table 3**

| | Ex. 14 | Ex. 15 | Ex. 16 | Ex. 17 | Ex. 18 | |
|---|---|---|---|---|---|---|
| Natural rubber | 70 | 70 | 70 | 70 | 70 | |
| Butadiene rubber | 30 | 30 | 30 | 30 | 30 | |
| Isoprene rubber | - | - | - | - | - | |
| Styrene-butadiene rubber | - | - | - | - | - | |
| Carbon black 2 | - | - | - | 15 | - | |
| Carbon black 3 | - | 15 | 15 | - | - | |
| Carbon black 4 | 15 | - | - | - | 25 | |
| Silica 2 | - | - | - | - | - | |
| Silica 3 | 60 | 50 | 60 | 60 | - | |
| Silica 4 | - | - | - | - | 45 | |
| Silane coupling agent 1 | - | 6.5 | 6.6 | 7.2 | 5.4 | |
| Silane coupling agent 2 | - | - | - | - | - | |
| Silane coupling agent 3 | 7.2 | - | - | - | - | |
| Zinc oxide | 3 | 3 | 3 | 3 | 3 | |
| Stearic acid | 3 | 3 | 3 | 3 | 3 | |
| Wax | 1 | 1 | 1 | 1 | 1 | |
| Processing aid | 1 | 1 | 1 | 1 | 1 | |
| Antioxidant | 2 | 2 | 2 | 2 | 2 | |
| Vulcanization accelerator 1 | 0.75 | 0.75 | 0.75 | 0.75 | 0.75 | |
| Vulcanization accelerator 2 | 1 | 1 | 1 | 1 | 1 | |
| Sulfur | 1.5 | 1.5 | 1.5 | 1.5 | 1.5 | |
| Silica/carbon black | 400 | 3.33 | 4.00 | 4.00 | 1.80 | |
| Amount of silane coupling agent relative to silica content (% by mass) | 12% | 13% | 11% | 12% | 12% | |
| Modulus (M300) | 99 | 103 | 105 | 103 | 102 | |
| Low rolling resistance | 117 | 133 | 123 | 130 | 115 | |
| Abrasion resistance | 145 | 115 | 125 | 115 | 126 | |

| | Ex. 19 | Ex. 20 | Ex. 21 | Ex. 22 | Ex. 23 | Ex. 24 |
|---|---|---|---|---|---|---|
| Natural rubber | 70 | 70 | 70 | 70 | 60 | 50 |
| Butadiene rubber | 30 | 30 | 30 | 30 | 30 | 50 |
| Isoprene rubber | - | - | - | - | 10 | - |
| Styrene-butadiene rubber | - | - | - | - | - | - |
| Carbon black 2 | - | - | - | - | - | - |
| Carbon black 3 | - | - | - | - | - | - |
| Carbon black 4 | 25 | 15 | 15 | 15 | 15 | 15 |
| Silica 2 | - | - | - | - | | - |
| Silica 3 | - | - | - | - | 60 | 60 |
| Silica 4 | 55 | 60 | 60 | 60 | - | - |
| Silane coupling agent 1 | 5.5 | 7.2 | - | - | 6 | 6 |
| Silane coupling agent 2 | - | - | 9 | - | - | - |
| Silane coupling agent 3 | - | - | - | 9 | - | - |
| Zinc oxide | 3 | 3 | 3 | 3 | 3 | 3 |
| Stearic acid | 3 | 3 | 3 | 3 | 3 | 3 |
| Wax | 1 | 1 | 1 | 1 | 1 | 1 |
| Processing aid | 1 | 1 | 1 | 1 | 1 | 1 |
| Antioxidant | 2 | 2 | 2 | 2 | 2 | 2 |
| Vulcanization accelerator 1 | 0.75 | 1 | 1 | 1 | 0.75 | 0.75 |
| Vulcanization accelerator 2 | 1 | 1 | 1 | 1 | 1 | 1 |
| Sulfur | 1.5 | 1.5 | 1.5 | 1.5 | 1.5 | 1.5 |
| Silica/carbon black | 2.20 | 4.00 | 4.00 | 4.00 | 4.00 | 400 |
| Amount of silane coupling agent relative to silica content (% by mass) | 10% | 12% | 15% | 15% | 10% | 10% |
| Modulus (M300) | 100 | 104 | 100 | 98 | 105 | 95 |
| Low rolling resistance | 102 | 114 | 124 | 114 | 117 | 107 |
| Abrasion resistance | 134 | 143 | 143 | 155 | 130 | 130 |

The results are as shown in Table 1. Comparative Example 2 is an example in which silica and carbon black are used in combination, the content of silica is less than the lower limit, the content of carbon black is more than the upper limit, and the content rate between silica and carbon black by mass rate (silica/carbon black) is less than 1. In Comparative Example 2, compared to Comparative Example 1, low rolling resistance was improved but abrasion resistance was deteriorated.

Comparative Example 3 is an example in which the content of carbon black is more than the upper limit, and the content rate between silica and carbon black by mass rate (silica/carbon black) is less than 1. In Comparative Example 3, compared to Comparative Example 1, low rolling resistance was improved but abrasion resistance was deteriorated.

Comparative Example 4 is an example in which silica and carbon black are used in combination, and the content of carbon black is less than the lower limit. In Comparative Example 4, compared to Comparative Example 1, abrasion resistance was poor.

Comparative Example 5 is an example in which carbon black having a nitrogen adsorption specific surface area of less than the lower limit was used. In Comparative Example 5, compared to Comparative Example 1, abrasion resistance was poor.

Comparative Example 6 is an example in which silica having a nitrogen adsorption specific surface area of less than the lower limit was used. In Comparative Example 6, compared to Comparative Example 1, abrasion resistance was poor.

Comparative Example 7 is an example in which the content of carbon black is less than the lower limit. In Comparative Example 7, compared to Comparative Example 1, abrasion resistance was poor.

Examples 1 to 3 are examples in which the silica content was varied within the predetermined range. According to Examples 1 to 3, it was understood that when the silica content was closer to the lower limit, samples tended to be excellent in low rolling resistance, and when the silica content was closer to the upper limit, samples tended to be excellent in abrasion resistance.

Examples 4 and 5 are examples in which the content of carbon black was reduced compared to that in Examples 1 to 3 and the silica content was varied. According to Examples 4 and 5, similar to Examples 1 to 3, it was understood that when the silica content was closer to the lower limit, samples tended to be excellent in low rolling resistance, and when the silica content was closer to the upper limit, samples tended to be excellent in abrasion resistance.

Examples 6 and 7 are examples in which silica having larger nitrogen adsorption specific surface area than that in Examples 1 to 3 was used. According to Examples 6 and 7, similar to Examples 1 to 3, it was understood that when the silica content was closer to the lower limit, samples tended to be excellent in low rolling resistance, and when the silica content was closer to the upper limit, samples tended to be excellent in abrasion resistance. In addition, by a comparison between Example 1 and Example 7, it was understood that when the nitrogen adsorption specific surface area of silica was larger, there was a tendency that an improvement effect of low rolling resistance was reduced and an improvement effect of abrasion resistance was increased.

Next, as shown in Tables 2 and 3, Comparative Example 9 is an example in which silica and carbon black are used in combination, the content of carbon black is more than the upper limit, and the content rate between silica and carbon black by mass rate (silica/carbon black) is less than 1. In Comparative Example 9, compared to Comparative Example 8, abrasion resistance was poor.

Comparative Example 10 is an example in which the content rate of natural rubber is less than the lower limit. In Comparative Example 10, compared to Comparative Example 8, low rolling resistance was poor.

Comparative Example 11 is an example in which silica and carbon black are used in combination, the content of carbon black is more than the upper limit, and the content rate between silica and carbon black by mass rate (silica/carbon black) is less than 1. In Comparative Example 11, compared to Comparative Example 8, low rolling resistance and abrasion resistance were poor.

Comparative Example 12 is an example in which silica and carbon black are used in combination, and the content of carbon black is less than the lower limit. In Comparative Example 12, compared to Comparative Example 8, abrasion resistance was poor.

Example 8 is an example in which silica having a nitrogen adsorption specific surface area being close to the lower limit was used, and the silica was blended in a large amount in order to adjust the modulus to be the same level with that in Comparative Example 8. In Example 8, compared to Comparative Example 8, low rolling resistance and abrasion resistance were excellent.

Examples 9 and 10 are examples in which the silica in Example 8 was changed to one having a larger nitrogen adsorption specific surface area, and the silica content was varied within the predetermined range. According to Examples 9 and 10, it was understood that when the silica content was closer to the lower limit, samples tended to be excellent in low rolling resistance, and when the silica content was closer to the upper limit, samples tended to be excellent in abrasion resistance.

Examples 11 and 12 are examples in which the content of carbon black was reduced compared to that in Examples 9 and 10 and the silica content was varied. According to Examples 11 and 12, similar to Examples 9 and 10, it was understood that when the silica content was closer to the lower limit, samples tended to be excellent in low rolling resistance, and when the silica content was closer to the upper limit, samples tended to be excellent in abrasion resistance.

Examples 13 and 14 are examples in which the silane coupling agent in Example 12 was changed. In Example 13, compared to Example 12, low rolling resistance was improved. In Example 14, compared to Example 12, abrasion resistance was improved.

Examples 15 and 16 are examples in which the carbon black in Examples 11 and 12 was changed to one having a smaller nitrogen adsorption specific surface area. In Examples 15 and 16, compared to Examples 11 and 12, abrasion resistance was deteriorated but low rolling resistance was improved.

Example 17 is an example in which the carbon black in Example 16 was changed to one having a further smaller nitrogen adsorption specific surface area. In Example 17, compared to Example 16, abrasion resistance was deteriorated but low rolling resistance was improved.

Examples 18 and 19 are examples in which the silica in Examples 9 and 10 was changed to one having a further larger nitrogen adsorption specific surface area. In Examples 18 and 19, compared to Examples 9 and 10, abrasion resistance was improved.

Example 20 is an example in which the silica in Example 12 was changed to one having a larger nitrogen adsorption specific surface area. In Example 20, compared to Example 12, abrasion resistance was improved.

Examples 21 and 22 are examples in which the silane coupling agent in Example 20 was changed. In Example 21, compared to Example 20, low rolling resistance was improved. In Example 22, compared to Example 20, abrasion resistance was improved.

Examples 23 and 24 are examples in which the formulation of rubber components in Example 12 was changed. Both in Examples 23 and 24, compared to Comparative Example 8, low rolling resistance and abrasion resistance were improved.

The rubber composition of the invention can be used for rubber compositions for various tires of passenger cars, light trucks, trucks, buses, etc.

## Claims

1. A rubber composition for a tire tread, comprising:
100 parts by mass of diene rubber containing 50% by mass or more of natural rubber and/or isoprene rubber;
14 to 30 parts by mass of carbon black having a nitrogen adsorption specific surface area of 80 to 150 m²/g; and
30 to 80 parts by mass of silica having a nitrogen adsorption specific surface area of 120 to 250 m²/g,
wherein a content rate between the silica and the carbon black (silica/carbon black) by mass rate is more than 1.

2. The rubber composition for a tire tread according to claim 1, for a heavy-load tire.

3. The rubber composition for a tire tread according to claim 1 or 2, comprising a silane coupling agent having a sulfide bond, by a ratio of 6 to 15% by mass relative to the content of the silica.

4. The rubber composition for a tire tread according to claim 1 or 2, comprising a mercapto silane coupling agent by a ratio of 6 to 15% by mass relative to the content of the silica.

5. The rubber composition for a tire tread according to any one of claims 1 to 4, wherein the content rate between the silica and the carbon black (silica/carbon black) by mass rate is 1.2 to 5.0.

6. The rubber composition for a tire tread according to any one of claims 1 to 4, wherein the content rate between the silica and the carbon black (silica/carbon black) by mass rate is 3.0 to 5.0.

7. The rubber composition for a tire tread according to any one of claims 1 to 6, wherein the nitrogen adsorption specific surface area of the silica is 160 to 210 m²/g.

8. The rubber composition for a tire tread according to any one of claims 1 to 7, wherein the nitrogen adsorption specific surface area of the carbon black is 120 to 150 m²/g.

9. The rubber composition for a tire tread according to any one of claims 1 to 8, wherein a total content of the silica and the carbon black per 100 parts by mass of the diene rubber is 40 to 120 parts by mass.

10. A pneumatic tire formed by using the rubber composition according to any one of claims 1 to 9 for a tread.
